# EUROPEAN PATENT APPLICATION

(11) **EP 4 837 804 A1**
(43) Date of publication of application: **11.11.2026**
(21) Application number: 26168539.0
(22) Date of filing: 27.03.2026
(51) Int. Cl.: B60W 30/12, B60K 35/22, B60K 35/29, B60W 50/14, G06V 20/56, G08G 1/16

(54) **DISPLAY CONTROL DEVICE**

(30) Priority: 24.04.2025 JP 2025072676
(71) Applicant: Toyota Jidosha Kabushiki Kaisha, Toyota-shi, Aichi-ken 471-8571 (JP)
(72) Inventor: HATTORI, Tsutomu, TOYOTA-SHI, AICHI-KEN, 471-8571 (JP); KONISHI, Shogo, TOYOTA-SHI, AICHI-KEN, 471-8571 (JP); NISHIDA, Takashi, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-CITY, AICHI-PREF, 448-8661 (JP)
(74) Representative: Cabinet Beau de Loménie

(57) **Abstract**

A meter ECU includes an acquisition unit (21A) configured to acquire a surrounding situation of a vehicle, and a control unit (21B) configured to, when an image indicating the surrounding situation of the vehicle is displayed on a monitor provided near a driver's seat of the vehicle and only a lane line on one side of the vehicle is recognized, define a width of a lane in which the vehicle is traveling and display an image indicating the vehicle based on a position of the vehicle in a lane-width direction with the lane line as a reference.

## Description

### BACKGROUND OF THE INVENTION

### 1. Field of the Invention

The present disclosure relates to a display control device.

### 2. Description of Related Art

Japanese Unexamined Patent Application Publication No. 2022-066952 (JP 2022-066952 A) discloses a technology in which, when another vehicle is present in a distant region ahead of a vehicle in a traveling direction outside a display range on a screen, a mark indicating that the other vehicle is present in the distant region ahead of the vehicle in the traveling direction outside the display range on the screen is displayed at a fixed position of a traveling lane displayed on the screen.

### SUMMARY OF THE INVENTION

With the technology disclosed in JP 2022-066952 A, when only a lane line on one side is recognized, correctly calculating a position of a host vehicle in a lateral direction is difficult. When display control is performed to move an image indicating the host vehicle toward a lane center, the image indicating the host vehicle may remain displayed at the lane center when an occupant intentionally drives the host vehicle close to the lane line during a lane change or the like, and a deviation may occur between a display position and an actual position.

An object of the present disclosure is to provide a display control device that can display an image indicating a host vehicle with a movement close to an actual movement even when only a lane line on one side is recognized.

A display control device according to a first aspect includes an acquisition unit configured to acquire a surrounding situation of a host vehicle; and a display control unit configured to, when an image indicating the surrounding situation of the host vehicle is displayed on a display unit provided near a driver's seat of the host vehicle and only a lane line on one side of the host vehicle is recognized, define a width of a lane in which the host vehicle is traveling and display an image indicating the host vehicle based on a position of the host vehicle in a lane-width direction with the lane line as a reference.

With the display control device according to the first aspect, an image indicating the host vehicle with a movement close to an actual movement can be displayed even when only a lane line on one side is recognized.

A display control device according to a second aspect is the display control device according to the first aspect, in which the display control unit is configured to define a position obtained by offsetting the lane line by a predetermined width as a center of the lane in which the host vehicle is traveling, and to identify the position of the host vehicle in the lane-width direction with the lane line as a reference.

With the display control device according to the second aspect, by offsetting the lane line, it is possible to define the center of the lane (that is, to define the lane width) in which the host vehicle is traveling.

A display control device according to a third aspect is the display control device according to the second aspect, further including a setting unit configured to set a predetermined width including the center of the lane as a dead zone that does not respond to a movement of the host vehicle in the lane-width direction, in which the display control unit is configured to change a position of the image indicating the host vehicle in the lane-width direction when the host vehicle is outside the dead zone.

With the display control device according to the third aspect, since fine movements of the host vehicle in the lane-width direction do not need to be displayed, display-related inconvenience can be reduced.

A display control device according to a fourth aspect is the display control device according to the first aspect, in which, the display control unit is configured to, when lane lines on both sides have been recognized before only the lane line on one side is recognized, define a lane width determined by the lane lines on both sides as the width of the lane in which the host vehicle is traveling, and identify the position of the host vehicle in the lane-width direction with the lane line as a reference.

With the display control device according to the fourth aspect, the width of the lane in which the host vehicle is traveling can be defined by adopting the lane width determined by the lane lines on both sides that are recognized before only the lane line on one side is recognized.

A display control device according to a fifth aspect is the display control device according to the fourth aspect, further including a setting unit configured to set a dead zone that does not respond to a movement of the host vehicle in the lane-width direction based on the lane width determined by the lane lines on both sides, in which the display control unit is configured to change a position of the image indicating the host vehicle in the lane-width direction when the host vehicle is outside the dead zone.

With the display control device according to the fifth aspect, since fine movements of the host vehicle in the lane-width direction do not need to be displayed, display-related inconvenience can be reduced.

As described above, according to the present disclosure, a host vehicle with a movement close to an actual movement can be displayed even when only a lane line on one side is recognized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a hardware configuration of a vehicle;
FIG. 2A is a diagram for describing a positional relationship of a vehicle;
FIG. 2B is a diagram showing a display image representing the positional relationship of the vehicle shown in FIG. 2A;
FIG. 3 is a diagram showing a state in which the vehicle recognizes only a first lane line on one side;
FIG. 4A is a diagram for describing a method of identifying a position of the vehicle when the vehicle recognizes only the first lane line on one side;
FIG. 4B is a diagram showing a display image representing the position of the vehicle identified by the method shown in FIG. 4A;
FIG. 5 is a diagram showing an example of a state in which a dead zone is set; and
FIG. 6 is a flowchart showing an example of a flow of display control processing executed by a meter ECU.

### DETAILED DESCRIPTION OF EMBODIMENTS

Hereinafter, a vehicle 10 according to the present embodiment will be described.

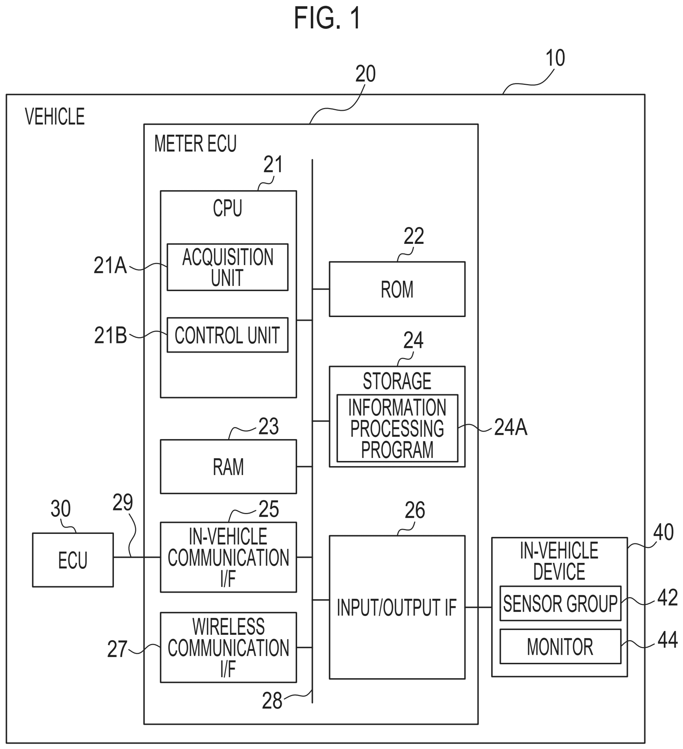

FIG. 1 is a block diagram showing a hardware configuration of the vehicle 10. As shown in FIG. 1, the vehicle 10 includes a meter electronic control unit (ECU) 20. The vehicle 10 is an example of a "vehicle" in the present disclosure, and the meter ECU 20 is an example of a "display control device" in the present disclosure.

The meter ECU 20 includes a central processing unit (CPU) 21, a read only memory (ROM) 22, a random access memory (RAM) 23, a storage 24, an in-vehicle communication interface (I/F) 25, an input/output I/F 26, and a wireless communication I/F 27. The components are communicably connected to each other via an internal bus 28.

The CPU 21 is a central processing unit, and executes various programs or controls each unit. That is, the CPU 21 reads a program from the ROM 22 or the storage 24, and executes the program using the RAM 23 as a work area. The CPU 21 performs control of each of the components and various arithmetic processing according to the program recorded in the ROM 22 or the storage 24.

The ROM 22 stores various programs and various data. The RAM 23 temporarily stores a program or data, as a work area.

The storage 24 is configured by a storage medium such as an embedded multi media card (eMMC) or universal flash storage (UFS), and stores various programs and various data. The storage 24 stores an information processing program 24A. The information processing program 24A is a program for causing the CPU 21 to execute display control processing according to the present embodiment.

The in-vehicle communication I/F 25 is an interface for connecting to another ECU 30, and a communication standard based on a controller area network (CAN) protocol is used. The in-vehicle communication I/F 25 is connected to an external bus 29. Although not shown, the ECU is not limited to the ECU 30 and a plurality of ECUs is provided according to various functions in the vehicle 10.

The input/output I/F 26 is an interface for communicating with an in-vehicle device 40 mounted on the vehicle 10.

The in-vehicle device 40 includes various devices mounted on the vehicle 10. The vehicle 10 includes a sensor group 42 and a monitor 44 as examples of the in-vehicle device 40.

The sensor group 42 includes various sensors and an imaging unit for detecting a state of the vehicle 10 and a surrounding situation of the vehicle 10. Specifically, the sensor group 42 includes, for example, various sensors such as a 3D-LiDAR sensor, a millimeter wave sensor, an infrared sensor, a blinker sensor, an accelerator position sensor, a vehicle speed sensor, a steering angle sensor, an angular velocity sensor, a global positioning system (GPS) sensor, an illuminance sensor, a gyro sensor, a steering wheel angle sensor, and an acceleration sensor, and a plurality of cameras that captures images of the surroundings of the vehicle 10. The sensor group 42 outputs detection results from the sensors and images captured by the cameras to predetermined electronic control units such as the meter ECU 20 and the ECU 30.

The monitor 44 is a meter display that is provided on a meter panel disposed in front of a driver's seat of the vehicle 10 and is for displaying suggestions for operation of functions of the vehicle 10 and images and the like related to explanations of the functions. The monitor 44 is an example of a "display unit" in the present disclosure.

The wireless communication I/F 27 is a wireless communication module for communicating with an external device. For example, communication standards such as 5G, LTE, Wi-Fi (registered trademark), and Bluetooth (registered trademark) are used in the wireless communication module.

In addition, the CPU 21 of the meter ECU 20 includes an acquisition unit 21A and a control unit 21B as functional components. Each functional component is realized by the CPU 21 reading and executing the information processing program 24A stored in the storage 24.

The acquisition unit 21A acquires various types of information that can be acquired in the vehicle 10. Specifically, the acquisition unit 21A acquires detection information such as detection results from various sensors constituting the sensor group 42 and images captured by the cameras as various types of information. The acquisition unit 21A acquires surrounding information representing the surrounding situation of the vehicle 10.

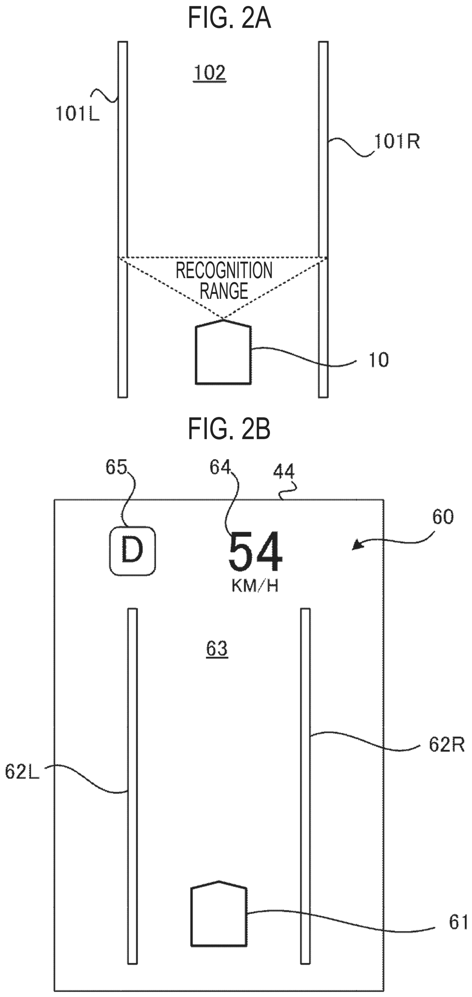

The control unit 21B performs display control related to the display of the monitor 44. For example, as the display control, the control unit 21B, based on the detection information acquired by the acquisition unit 21A, causes a surrounding situation display indicating the surrounding situation of the vehicle 10 when viewed from a virtual viewpoint, and a vehicle image indicating the vehicle 10 (see FIG. 2B, or the like) to be displayed on the monitor 44. Here, the "virtual viewpoint" is a viewpoint set in a three-dimensional virtual space in which the position of the vehicle image is set as an origin, and the virtual viewpoint is defined by predetermined viewpoint coordinates and a viewpoint angle (orientation) in the virtual space. As an example, the virtual viewpoint is a viewpoint that overlooks the vehicle 10 and the surroundings thereof at a specific viewpoint angle from a specific viewpoint coordinate located above the vehicle image in the virtual space. The control unit 21B is an example of a "display control unit" and a "setting unit" in the present disclosure.

FIG. 2A is a diagram for describing a positional relationship of the vehicle 10. In FIG. 2A, the vehicle 10 is traveling in a lane 102 that is defined by a first lane line 101L and a second lane line 101R on both sides of the vehicle 10. The first lane line 101L is a lane line on a left side of the vehicle 10, and the second lane line 101R is a lane line on a right side of the vehicle 10. When it is not necessary to particularly distinguish and describe the first lane line 101L and the second lane line 101R, the lane lines described above are simply referred to as a lane line 101. FIG. 2B is a diagram showing a display image 60 representing the positional relationship of the vehicle 10 shown in FIG. 2A. For convenience of description, the display image 60 including the vehicle image 61 is shown two-dimensionally. As shown in FIG. 2B, the control unit 21B displays the display image 60 representing the positional relationship between the vehicle 10 shown in FIG. 2A in a predetermined display area of the monitor 44. The predetermined display area is a part of the monitor 44 and is set such that a driver seated in the driver's seat can visually recognize the display area through the opening of a steering wheel. The display image 60 includes a vehicle image 61 showing the vehicle 10, a first lane line image 62L showing the first lane line 101L, a second lane line image 62R showing the second lane line 101R, and a lane image 63 showing the lane 102. The first lane line image 62L is a lane line image on a left side of the vehicle image 61, and the second lane line image 62R is a lane line image on a right side of the vehicle image 61. When it is not necessary to particularly distinguish and describe the first lane line image 62L and the second lane line image 62R, the lane line images described above are simply referred to as a lane line image 62. In addition, an image 64 showing a traveling speed of the vehicle 10 and an image 65 showing a shift position of the vehicle 10 are displayed above the lane image 63.

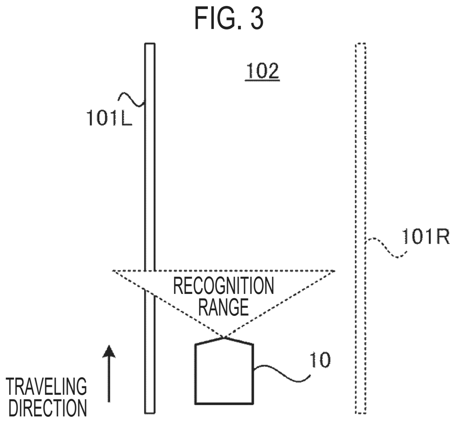

As shown in FIG. 3, when the vehicle 10 recognizes only a lane line 101 on one side, correctly calculating a position of the vehicle 10 in a lateral direction is difficult. FIG. 3 shows a state in which the vehicle 10 recognizes only a first lane line 101L on one side. In this case, when control is performed to move the vehicle image 61 toward the center of the lane image 63, the vehicle image 61 may remain displayed at the center of the lane image 63 when an occupant intentionally drives a host vehicle close to the lane line during a lane change or the like, and a deviation may occur between a display position and an actual position.

Therefore, when displaying the display image 60 that is an image indicating the surrounding situation of the vehicle 10 on the monitor 44 provided near the driver's seat of the vehicle 10 and only a lane line 101 on one side of the vehicle 10 is recognized, the control unit 21B of the present embodiment defines a width of the lane 102 in which the vehicle 10 is traveling and displays the vehicle image 61 based on the position of the vehicle 10 in a lane-width direction with the lane line 101 as a reference. Here, the term "define" refers to identifying a provisional lane width (for example, a typical lane width of 3.6 m) when only a lane line 101 on one side is recognized, although the width of the lane 102 cannot actually be identified unless the lane lines 101 on both sides are recognized. The position of the vehicle 10 in the lane-width direction is a position in a direction intersecting (for example, orthogonal to) the traveling direction (indicated by an arrow) of the vehicle 10, that is, a position in a left-right direction (lane-width direction) as viewed from the vehicle 10. Accordingly, the vehicle image 61 can be displayed with a movement close to an actual movement even when only a lane line 101 on one side is recognized.

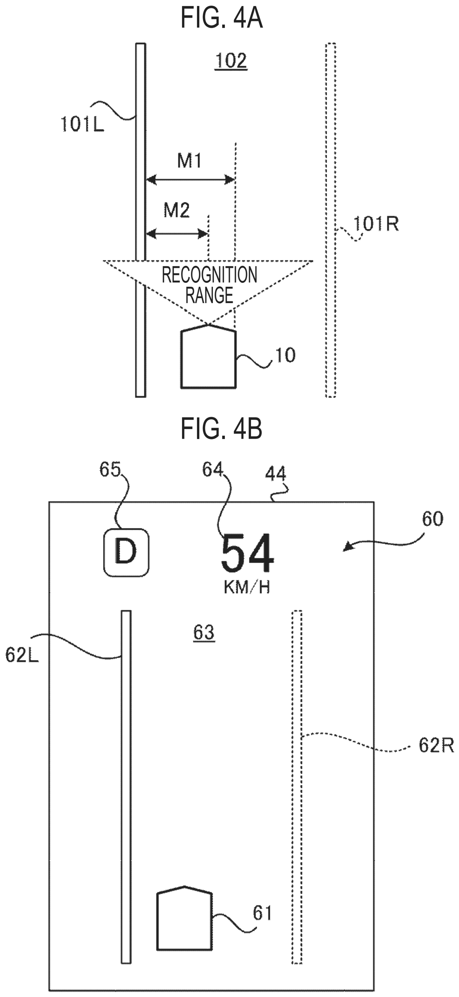

FIG. 4A is a diagram for describing a method of identifying the position of the vehicle 10 when the vehicle 10 recognizes only a first lane line 101L on one side. As shown in FIG. 4A, the control unit 21B defines a position M1 obtained by offsetting the first lane line 101L by a predetermined width as a center of the lane 102 in which the vehicle 10 is traveling, and identifies a position M2 of the vehicle 10 in the lane-width direction with the first lane line 101L as a reference. Specifically, since the typical lane width is, for example, 3.6 m, the predetermined width is 1.8 m, which is half of 3.6 m. That is, in the example of FIG. 4A, the center of the lane 102 is defined as M1 = 1.8 m. The lane width is not limited to 3.6 m, and various lane widths may be set in advance. Then, the position M2 of the vehicle 10 in the lane-width direction is identified with the first lane line 101L as a reference. The same applies when the vehicle 10 recognizes only a second lane line 101R on one side. That is, the control unit 21B defines a position obtained by offsetting the second lane line 101R by a predetermined width as the center of the lane 102 in which the vehicle 10 is traveling, and identifies a position of the vehicle 10 with the second lane line 101R as a reference. Accordingly, by offsetting the lane line 101, it is possible to define the center of the lane 102 (that is, to define the lane width) in which the vehicle 10 is traveling.

In addition, when the first lane line 101L and the second lane line 101R on both sides have been recognized before only the first lane line 101L on one side is recognized, the control unit 21B may define a lane width determined by the first lane line 101L and the second lane line 101R on both sides as a width of the lane 102 in which the vehicle 10 is traveling, and identify the position of the vehicle 10 in the lane-width direction with the first lane line 101L as a reference. When the first lane line 101L and the second lane line 101R on both sides have been recognized before only the first lane line 101L on one side is recognized, the control unit 21B stores the lane width determined by the first lane line 101L and the second lane line 101R on both sides in the storage 24. The phrase "before only the first lane line 101L on one side is recognized" preferably refers to immediately before only the first lane line 101L on one side is recognized, but it is not limited to immediately before. Accordingly, the width of the lane 102 in which the vehicle 10 is traveling can be defined by adopting the lane width determined by the lane lines 101 on both sides that are recognized before only the first lane line 101L on one side is recognized.

FIG. 4B is a diagram showing the display image 60 representing the position of the vehicle 10 identified by the method shown in FIG. 4A. As shown in FIG. 4B, the vehicle image 61 can be displayed with a movement close to an actual movement even when the vehicle 10 recognizes only the first lane line 101L on one side.

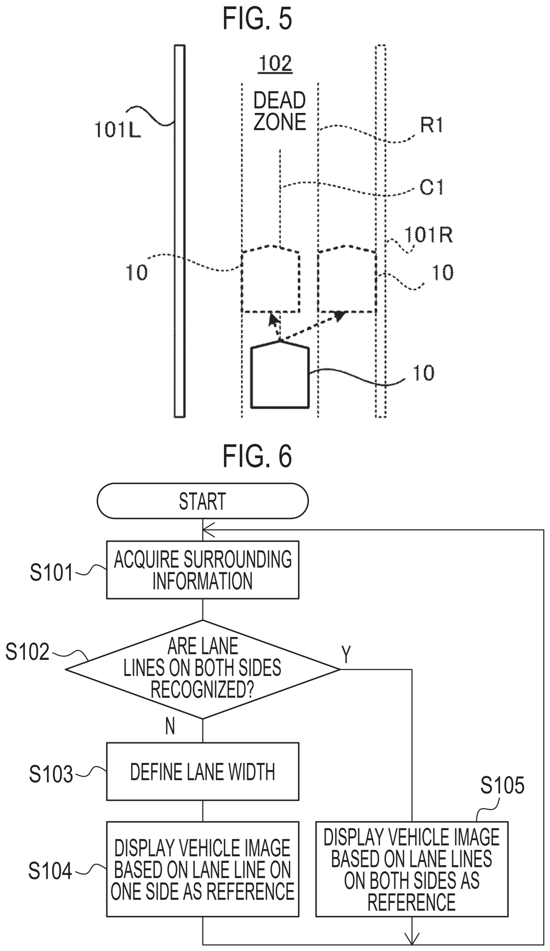

FIG. 5 is a diagram showing an example of a state in which a dead zone R1 is set. As shown in FIG. 5, the control unit 21B sets a predetermined width including a center C1 of the lane 102 as the dead zone R1 that does not respond to the movement of the vehicle 10 in the lane-width direction. The dead zone R1 is a region set in the recognition range of the sensor group 42, and does not respond to the movement of the vehicle 10 in the region, so that the movement of the vehicle 10 is not reflected in the display. The dead zone R1 may be configured such that the sensor group 42 performs recognition while the display does not change, or may be configured such that the recognition by the sensor group 42 is canceled so that the display does not change. In this case, the control unit 21B changes a position of the vehicle image 61 indicating the vehicle 10 in the lane-width direction when the vehicle 10 is outside the dead zone R1. The position of the vehicle 10 may be changed when at least a part of the vehicle 10 is outside the dead zone R1, or the position of the vehicle 10 may be changed only when the entire vehicle 10 is outside the dead zone R1. Accordingly, since fine movements of the vehicle 10 in the lane-width direction do not need to be displayed, display-related inconvenience can be reduced.

In addition, when the first lane line 101L and the second lane line 101R on both sides have been recognized before only the first lane line 101L on one side is recognized, the dead zone that does not respond to the movement of the vehicle 10 in the lane-width direction may be set based on the lane width determined by the first lane line 101L and the second lane line 101R on both sides. In this case as well, the control unit 21B changes the position of the vehicle image 61 indicating the vehicle 10 when the vehicle 10 is outside the dead zone R1. Accordingly, since fine movements of the vehicle 10 in the lane-width direction do not need to be displayed, display-related inconvenience can be reduced.

FIG. 6 is a flowchart showing an example of a flow of display control processing executed by the meter ECU 20. The CPU 21 reads the information processing program 24A from the storage 24, loads the information processing program 24A into the RAM 23, and executes the information processing program 24A to perform the display control processing. The display control processing is automatically executed repeatedly at predetermined time intervals, for example.

In step S101 of FIG. 6, the CPU 21 acquires surrounding information indicating the surrounding situation of the vehicle 10. Specifically, as described above, the vehicle 10 is provided with the sensor group 42 that can detect the surrounding situation, and the information detected by the sensor group 42 is acquired as the surrounding information.

In step S102, the CPU 21 determines whether the lane lines 101 on both sides are recognized based on the surrounding information acquired in step S101. When it is determined that the lane lines 101 on both sides are not recognized, that is, when it is determined that only a lane line 101 on one side is recognized (negative determination), the process proceeds to step S103, and when it is determined that the lane lines 101 on both sides are recognized (positive determination), the process proceeds to step S105.

In step S103, the CPU 21 defines a width of the lane 102 in which the vehicle 10 is traveling. Specifically, as an example, as shown in FIG. 4A, the position M1 obtained by offsetting the first lane line 101L on one side by a predetermined width is defined as the center of the lane 102 in which the vehicle 10 is traveling. When the first lane line 101L and the second lane line 101R on both sides have been recognized before only the first lane line 101L on one side is recognized, the lane width determined by the first lane line 101L and the second lane line 101R on both sides may be defined as a width of the lane 102 in which the vehicle 10 is traveling.

In step S104, the CPU 21, as an example, displays the vehicle image 61 based on the position M2 of the vehicle 10 in the lane-width direction with the first lane line 101L on one side recognized in step S102 as a reference, as shown in FIG. 4B, and returns to step S101 to repeat the processing.

On the other hand, in step S105, the CPU 21, as an example, displays the vehicle image 61 based on the position of the vehicle 10 in the lane-width direction with the lane lines 101 on both sides recognized in step S102 as a reference, as shown in FIG. 2B, and returns to step S101 to repeat the processing.

As described above, according to the present embodiment, when only a lane line on one side is recognized, the host vehicle can be displayed with a movement close to an actual movement when the host vehicle is driven intentionally close to the lane line during a lane change or the like.

Note that various processing executed by the CPU 21 by reading and executing software (a program) in the embodiment described above may be executed by various processors other than the CPU. Examples of the processor in this case include a programmable logic device (PLD) of which a circuit configuration can be changed after manufacture, such as a field-programmable gate array (FPGA), and a dedicated electric circuit that is a processor having a circuit configuration specially designed to execute specific processing, such as an application specific integrated circuit (ASIC). In addition, the various processing may be executed by one of the various processors, or may be executed by a combination of two or more processors of the same type or different types (for example, a combination of a plurality of FPGAs, and a CPU and an FPGA). Also, more specifically, the hardware structure of the various processors is an electric circuit in which circuit elements, such as semiconductor elements, are combined.

In addition, in the embodiment described above, a case has been described in which the information processing program 24A is stored (installed) in advance in the storage 24, but the present disclosure is not limited thereto. The information processing program 24A may also be provided in a form recorded on a recording medium, such as a compact disk read only memory (CD-ROM), a digital versatile disk read only memory (DVD-ROM), or a universal serial bus (USB) memory. In addition, the information processing program 24A may also be downloaded from an external device via a network. The technology of the present disclosure can also be applied to programs and program products.

## Claims

1. A display control device comprising:
an acquisition unit (21A) configured to acquire a surrounding situation of a host vehicle; and
a display control unit (21B) configured to, when an image indicating the surrounding situation of the host vehicle is displayed on a display unit provided near a driver's seat of the host vehicle (10) and only a lane line on one side of the host vehicle is recognized, define a width of a lane in which the host vehicle is traveling and display an image indicating the host vehicle based on a position of the host vehicle in a lane-width direction with the lane line as a reference.

2. The display control device according to claim 1, wherein the display control unit (21B) is configured to define a position obtained by offsetting the lane line by a predetermined width as a center of the lane in which the host vehicle (10) is traveling, and to identify the position of the host vehicle in the lane-width direction with the lane line as a reference.

3. The display control device according to claim 2, further comprising a setting unit (21B) configured to set a predetermined width including the center of the lane as a dead zone that does not respond to a movement of the host vehicle (10) in the lane-width direction,
wherein the display control unit is configured to change a position of the image indicating the host vehicle in the lane-width direction when the host vehicle is outside the dead zone.

4. The display control device according to any one of claims 1 to 3, wherein, the display control unit (21B) is configured to, when lane lines on both sides have been recognized before only the lane line on one side is recognized, define a lane width determined by the lane lines on both sides as the width of the lane in which the host vehicle (10) is traveling, and identify the position of the host vehicle in the lane-width direction with the lane line as a reference.

5. The display control device according to claim 4, further comprising a setting unit (21B) configured to set a dead zone that does not respond to a movement of the host vehicle in the lane-width direction based on the lane width determined by the lane lines on both sides,
wherein the display control unit is configured to change a position of the image indicating the host vehicle in the lane-width direction when the host vehicle is outside the dead zone.
